# EUROPEAN PATENT APPLICATION

(11) **EP 3 255 558 A1**
(43) Date of publication of application: **13.12.2017**
(21) Application number: 16746541.8
(22) Date of filing: 29.01.2016
(51) Int. Cl.: G06F 17/27, G06F 17/28

(54) **SYNTAX ANALYZING DEVICE, LEARNING DEVICE, MACHINE TRANSLATION DEVICE AND RECORDING MEDIUM**

(30) Priority: 02.02.2015 JP 2015018281
(71) Applicant: National Institute of Information and Communication Technology, Tokyo 184-8795 (JP)
(72) Inventor: UCHIYAMA, Masao, Tokyo 184-8795 (JP)
(74) Representative: Betten & Resch
(86) International application number: PCT/JP2016/052740
(87) International publication number: WO 2016/125710

(57) **Abstract**

In order to solve a conventional problem that the level of precision in reordering a source language sentence to match the word order on the target language side is not sufficient, a syntax analyzing device includes: a syntax analyzing unit that analyzes syntax of a sentence received by a receiving unit, thereby acquiring a first analysis result, which is an analysis result having one or more elements constituting the sentence and parts of speech of the respective one or more elements and has one or more binary trees each having the parts of speech or the elements as nodes; a category acquiring unit that acquires categories of the respective one or more elements constituting the sentence received by the receiving unit; a category inserting unit that acquires a second analysis result in which the categories of the elements are respectively inserted between the elements and the parts of speech of the elements, the elements respectively corresponding to the one or more categories acquired by the category acquiring unit, and constituting the first analysis result; and a learning unit that outputs the second analysis result acquired by the category inserting unit. Accordingly, it is possible to reorder a source language sentence to match the word order on the target language side at a very high level of precision.

## Description

### Technical field

The present invention relates to a syntax analyzing device for analyzing the syntax of a sentence, a learning device for a binary tree, and the like.

### Background Art

Conventionally, there are machine translation devices that perform machine translation while switching the word order in a binary tree contained in a result obtained by analyzing the syntax of a source language sentence.

A first example of such a machine translation device is directed to a machine translation device including: a swap operator storage part in which two or more swap operators are stored as information showing a context free grammar rule of a binary tree in which replacement of word order is generated; an acceptance part for accepting an original language sentence; a binary tree acquisition part for performing syntax analysis of the original language sentence, and for acquiring one or more binary trees by using a result of the syntax analysis; a determination part for applying the swap operators of the swap operator storage part to one or more binary trees, and for determining whether or not the binary trees correspond to any swap operator; a replacement part for replacing the word order of portions of leaves of the binary tree determined by the determination part to correspond to any swap operator; a machine translation part for executing machine translation to target language in response to a processing result of the replacement part, and for acquiring a target language sentence; and an output part for outputting the target language sentence acquired by the machine translation part (see Patent Document 1).

Furthermore, a second example of such a machine translation device is directed to a machine translation device including: a learning binary tree storage part in which one or more learning branch trees are stored as information showing the branch tree of the word order of original language; a division part for acquiring two or more elements by dividing the accepted original language; a search part for acquiring two or more elements of object language corresponding to each of the two or more elements; a syntax analysis object acquisition part for acquiring a syntax analysis object as a sentence having the word order of the original language, and the two or more elements of the object language; a binary tree acquisition part for performing the syntax analysis of the syntax analysis object, and for acquiring one or more binary trees of the object language having a flag indicating whether to replace the word order by using the one or more learning binary trees of the learning binary tree storage part; a replacement part for, when the flag of each of the one or more binary trees of the object language is information indicating that the word order should be replaced, replacing the word order of the slave nodes of the binary tree, and for acquiring an object language sentence; and an output part for outputting the object language sentence (see Patent Document 2).

### Citation List

### Patent Document

Patent Document 1: JP 2013-250605A (p. 1, FIG. 1, etc.)
Patent Document 2: JP 2013-218524A (p. 1, FIG. 1, etc.)

### Summary of Invention

### Technical Problem

However, according to the technique of Patent Document 1, word information and the like cannot be used, and thus the level of precision in switching the word order is limited.

Furthermore, according to the technique of Patent Document 2, learning is performed simultaneously on syntax analysis and swap determination, and thus the time taken for learning and analysis is long.

### Solution to Problem

A first aspect of the present invention is directed to a syntax analyzing device including: a receiving unit that receives a sentence; a syntax analyzing unit that analyzes syntax of the sentence received by the receiving unit, thereby acquiring a first analysis result, which is an analysis result having one or more elements constituting the sentence and parts of speech of the respective one or more elements and has one or more binary trees each having the parts of speech or the elements as nodes; a category acquiring unit that acquires categories of the respective one or more elements constituting the sentence received by the receiving unit; and a category inserting unit that acquires a second analysis result in which the categories of the elements are respectively inserted between the elements and the parts of speech of the elements, the elements respectively corresponding to the one or more categories acquired by the category acquiring unit, and constituting the first analysis result.

With this configuration, it is possible to provide a syntax analysis technique, for example, for learning a binary tree with which a source language sentence can be reordered to match the word order on the target language side at a very high level of precision.

Furthermore, a second aspect of the present invention is directed to a learning device according to the first aspect, including: a parallel corpus having a pair of parallel sentences, which is a pair of a source language sentence and a target language sentence; an element pair storage unit in which one or more element pairs, each of which is a pair of a source language element and a target language element, are stored; a second analysis result storage unit in which a second analysis result, which is a result of the processing on the source language sentence by the above-described syntax analyzing device and has one or more binary trees each having parts of speech, elements, or categories as nodes, and which is output by a learning unit of the above-described syntax analyzing device is stored; a target language element acquiring unit that acquires target language elements respectively corresponding to one or more source language elements that are one or more nodes constituting the second analysis result, from the element pair storage unit; a determining unit that determines whether or not to swap each of the one or more binary trees constituting the second analysis result during translation of the source language sentence into a target language sentence, based on word orders of the one or more target language elements acquired by the target language element acquiring unit and the one or more elements constituting the target language sentence; and a flag adding unit that adds flags, which are results of the determination by the determining unit, respectively in association with the one or more binary trees, thereby acquiring a third analysis result.

With this configuration, it is possible to learn a binary tree with which a source language sentence can be reordered to match the word order on the target language side at a very high level of precision.

Furthermore, a third aspect of the present invention is directed to a machine translation device according to the first aspect, including: an element pair storage unit in which one or more element pairs, each of which is a pair of a source language element and a target language element, are stored; a third analysis result storage unit in which one or more third analysis results are stored; a receiving unit that receives a source language sentence; a second syntax analyzing unit that analyzes syntax of the source language sentence received by the receiving unit, using the above-described syntax analyzing device, thereby acquiring a second analysis result; a determining unit that determines whether or not to swap each of one or more binary trees constituting the second analysis result, using flags added to the binary trees contained in the one or more third analysis results; a target language element acquiring unit that acquires target language elements respectively corresponding to one or more elements constituting the source language sentence having a word order according to results of the determination by the determining unit, from the element pair storage unit; and a target language sentence output unit that links the one or more target language elements acquired by the target language element acquiring unit according to the word order, and outputs a target language sentence.

With this configuration, it is possible to reorder a source language sentence to match the word order on the target language side at a very high level of precision, and thus it is possible to perform machine translation at a high level of precision.

Furthermore, a fourth aspect of the present invention is directed to a learning device including: a parallel corpus having a pair of parallel sentences, which is a pair of a source language sentence and a target language sentence; an element pair storage unit in which one or more element pairs, each of which is a pair of a source language element and a target language element, are stored; a binary tree storage unit in which one or more binary trees are stored, each of which is a binary tree constituting a syntax analysis result of a source language sentence, in which all of a parent node and two child nodes are parts of speech, and having, in association therewith, a flag indicating whether or not to swap the binary tree during translation of the source language sentence into a target language sentence; a syntax analyzing unit that analyzes syntax of the source language sentence, thereby acquiring a first analysis result, which is an analysis result having one or more elements constituting the sentence and parts of speech of the respective one or more elements and has one or more binary trees each having the parts of speech or the elements as nodes; a binary tree-to-be-processed acquiring unit that acquires one or more binary trees, each of which is a binary tree constituting the first analysis result, and in which all of a parent node and two child nodes are parts of speech; a determining unit that determines whether or not to swap each of the one or more binary trees acquired by the binary tree-to-be-processed acquiring unit, using the one or more binary trees in the binary tree storage unit; a target language element acquiring unit that acquires target language elements respectively corresponding to two source language elements respectively corresponding to child nodes of each of the one or more binary trees, from the element pair storage unit; a second determining unit that determines whether or not a word order of the two source language elements reflecting a result of the determination by the determining unit is the same as a word order of the two target language elements respectively corresponding to the two source language elements; and a flag changing unit that, in a case where the second determining unit determines that the word orders are not the same, changes a value of a flag at the parent node constituting the binary tree corresponding to the determination, to the opposite value.

With this configuration, it is possible to learn a binary tree with which a source language sentence can be reordered to match the word order on the target language side at a very high level of precision.

Furthermore, a fifth aspect of the present invention is directed to a learning device including: a learning binary tree storage unit in which one or more binary trees are stored, each of which is a binary tree having one or more source language elements or parts of speech of the respective one or more elements as nodes, has features that are features of a parent node constituting the binary tree and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child, and has, in association therewith, a flag indicating whether or not to swap the binary tree; a receiving unit that receives a source language sentence; a syntax analyzing unit that analyzes syntax of the source language sentence received by the receiving unit, thereby acquiring a first analysis result, which is an analysis result having one or more elements constituting the source language sentence and parts of speech of the respective one or more elements and has one or more binary trees each having the parts of speech or the elements as nodes; a feature acquiring unit that acquires features that are features of a parent node of each of the one or more binary trees contained in the first analysis result and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child; a determining unit that determines whether or not to swap each of the one or more binary trees contained in the first analysis result, by applying the four or more features acquired by the feature acquiring unit to the one or more binary trees stored in the learning binary tree storage unit; and a flag adding unit that adds flags, which are results of the determination by the determining unit, respectively in association with binary trees constituting the one or more binary trees.

With this configuration, it is possible to learn a binary tree with which a source language sentence can be reordered to match the word order on the target language side at a very high level of precision.

Furthermore, a sixth aspect of the present invention is directed to the learning device according to the fifth aspect, wherein any one or more binary trees stored in the learning binary tree storage unit have categories of elements between the elements and parts of speech thereof, the learning device further includes: a category acquiring unit that acquires categories of the respective one or more elements constituting the source language sentence received by the receiving unit; and a category inserting unit that respectively inserts the categories acquired by the category acquiring unit between the elements constituting the first analysis result acquired by the syntax analyzing unit and the parts of speech thereof, thereby acquiring a second analysis result, and the determining unit determines whether or not to swap each of the one or more binary trees contained in the second analysis result, by applying the four or more features acquired by the feature acquiring unit to the one or more binary trees stored in the learning binary tree storage unit.

With this configuration, it is possible to learn a binary tree with which a source language sentence can be reordered to match the word order on the target language side at a very high level of precision.

Furthermore, a seventh aspect of the present invention is directed to a machine translation device including: a learning binary tree storage unit in which one or more binary trees are stored, each of which is a binary tree having one or more source language elements or parts of speech of the respective one or more elements as nodes, has features that are features of a parent node constituting the binary tree and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child, and has, in association therewith, a flag indicating whether or not to swap the binary tree; a receiving unit that receives a source language sentence; a syntax analyzing unit that analyzes syntax of the source language sentence received by the receiving unit, thereby acquiring a first analysis result, which is an analysis result having one or more elements constituting the source language sentence and parts of speech of the respective one or more elements and has one or more binary trees each having the parts of speech or the elements as nodes; a feature acquiring unit that acquires features that are features of a parent node of each of the one or more binary trees contained in the first analysis result and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child; a determining unit that determines whether or not to swap each of the one or more binary trees contained in the first analysis result, by applying the four or more features acquired by the feature acquiring unit to the one or more binary trees stored in the learning binary tree storage unit; a target language sentence constructing unit that constructs a target language sentence, by acquiring one or more target language elements respectively corresponding to one or more source language elements constituting the source language sentence, in a word order based on results of the determination by the determining unit; and a target language sentence output unit that outputs the target language sentence.

With this configuration, it is possible to reorder a source language sentence to match the word order on the target language side at a very high level of precision, and thus it is possible to perform machine translation at a high level of precision.

Furthermore, an eighth aspect of the present invention is directed to the machine translation device according to the seventh aspect, wherein any one or more binary trees stored in the learning binary tree storage unit have categories of elements between the elements and parts of speech thereof, the machine translation device further includes: a category acquiring unit that acquires categories of the respective one or more elements constituting the source language sentence received by the receiving unit; and a category inserting unit that respectively inserts the categories acquired by the category acquiring unit between the elements constituting the first analysis result acquired by the syntax analyzing unit and the parts of speech thereof, thereby acquiring a second analysis result, and the determining unit determines whether or not to swap each of the one or more binary trees contained in the second analysis result, by applying the four or more features acquired by the feature acquiring unit to the one or more binary trees stored in the learning binary tree storage unit.

With this configuration, it is possible to reorder a source language sentence to match the word order on the target language side at a very high level of precision, and thus it is possible to perform machine translation at a high level of precision.

### Advantageous Effects of Invention

According to the learning device of the present invention, it is possible to reorder a source language sentence to match the word order on the target language side at a very high level of precision.

### Brief Description of Drawings

FIG. 1 is a block diagram of a syntax analyzing device 11 in Embodiment 1.
FIG. 2 is a block diagram of a learning device 1 including the syntax analyzing device 11 in the embodiment.
FIG. 3 is a flowchart illustrating an operation of the syntax analyzing device 11 in the embodiment.
FIG. 4 is a flowchart illustrating an operation of the learning device 1 in the embodiment.
FIG. 5 is a diagram showing a first analysis result in the embodiment.
FIG. 6 is a diagram showing a graphic tree structure that is the first analysis result in the embodiment.
FIG. 7 is a diagram showing a second analysis result in the embodiment.
FIG. 8 is a diagram showing a graphic tree structure that is the second analysis result in the embodiment.
FIG. 9 is a diagram showing a third analysis result in the embodiment.
FIG. 10 is a block diagram of a machine translation device 2 in Embodiment 2.
FIG. 11 is a flowchart illustrating an operation of the machine translation device 2 in the embodiment.
FIG. 12 is a block diagram of a learning device 3 in Embodiment 3.
FIG. 13 is a flowchart illustrating an operation of the learning device 3 in the embodiment.
FIG. 14 is a diagram showing a binary tree in the embodiment.
FIG. 15 is a diagram showing a first analysis result in the embodiment.
FIG. 16 is a diagram showing an intersection of a source language sentence and a target language sentence in the embodiment.
FIG. 17 is a diagram showing a flagged binary tree in the embodiment.
FIG. 18 is a block diagram of a learning device 4 in Embodiment 4.
FIG. 19 is a flowchart illustrating an operation of the learning device 4 in the embodiment.
FIG. 20 is a block diagram of a machine translation device 5 in Embodiment 5.
FIG. 21 is a flowchart illustrating an operation of the machine translation device 5 in the embodiment.
FIG. 22 is a diagram showing a constructed tree structure in the embodiment.
FIG. 23 is a schematic view of a computer system in the foregoing embodiments.
FIG. 24 is a block diagram of the computer system in the embodiments.

### Description of Embodiment

Hereinafter, embodiments of a learning device and the like according to the present invention will be described with reference to the drawings. It should be noted that constituent elements denoted by the same reference numerals in the embodiments perform similar operations, and thus a description thereof may not be repeated.

### Embodiment 1

In this embodiment, a syntax analyzing device that inserts a category between a part of speech and a word will be described.

Furthermore, in this embodiment, a reordering rule learning device using the syntax analyzing device will be described.

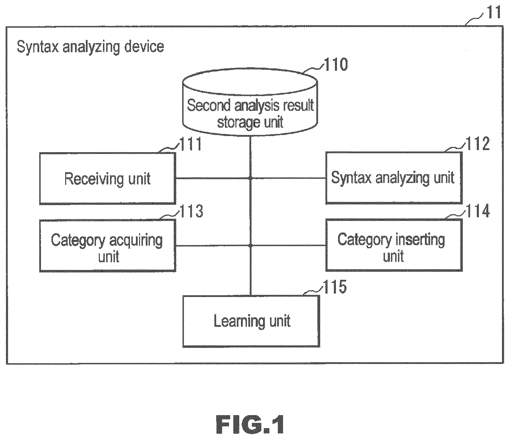

FIG. 1 is a block diagram of a syntax analyzing device 11 in this embodiment. The syntax analyzing device 11 includes a second analysis result storage unit 110, a receiving unit 111, a syntax analyzing unit 112, a category acquiring unit 113, a category inserting unit 114, and a learning unit 115.

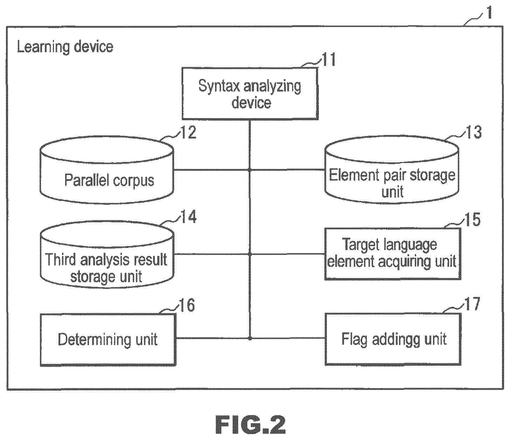

FIG. 2 is a block diagram of a learning device 1 including the syntax analyzing device 11 in this embodiment. The learning device 1 includes the syntax analyzing device 11, a parallel corpus 12, an element pair storage unit 13, a third analysis result storage unit 14, a target language element acquiring unit 15, a determining unit 16, and a flag adding unit 17.

In the second analysis result storage unit 110 constituting the syntax analyzing device 11, a second analysis result output by the learning unit 115 of the syntax analyzing device 11 can be stored. The output by the learning unit 115 is typically accumulating. The output is a concept that encompasses display on a display screen, projection using a projector, printing by a printer, transmission to an external apparatus, delivery of a processing result to another processing apparatus or another program, and the like. The second analysis result will be described later in detail.

The receiving unit 111 receives a sentence. The sentence is, for example, a source language sentence that is to be translated. The receiving is a concept that encompasses receiving information input from an input device such as a keyboard, a mouse, or a touch panel, receiving information transmitted via a wired or wireless communication line, receiving information read from a storage medium such as an optical disk, a magnetic disk, or a semiconductor memory, and the like. The sentence may be received by any part such as a keyboard, a mouse, a menu screen, or the like. The receiving unit 111 may be realized by a device driver for an input part such as a keyboard, or control software for a menu screen, for example.

The syntax analyzing unit 112 analyzes the syntax of the sentence received by the receiving unit 111, thereby acquiring a first analysis result. The first analysis result is an analysis result having one or more elements constituting the sentence and parts of speech of the respective one or more elements, and has one or more binary trees each having parts of speech or elements as nodes. Each of the elements is typically a word, but may be any portion constituting a sentence, such as a morpheme or a phrase. The first analysis result may have a partial tree that is not a binary tree. The first analysis result has a tree structure. The binary tree typically has a parent node and two child nodes. The binary tree may have, for example, grandchild nodes that are ancestors of child nodes. That is to say, the number of steps in the hierarchy of the binary trees is not limited to two, and may be three or more.

The processing by the syntax analyzing unit 112 is a known technique, and thus a detailed description thereof has been omitted. The syntax analyzing unit 112 may be realized, for example, by a parser such as a CaboCha (see URL "http://code.google.com/p/cabocha/"), a Berkeley Parser (Improved inference for unlexicalized parsing. In NAACL-HLT, pages 404-411, Rochester, New York, April. Association for Computational Linguistics.), or the like.

The category acquiring unit 113 acquires categories of the respective one or more elements constituting the sentence received by the receiving unit 111. There is no limitation on the method for acquiring categories, but, for example, the category acquiring unit 113 may acquire a category by searching, using an element as a key, an element dictionary having one or more pieces of element information having pairs of an element and a category thereof. For example, the category acquiring unit 113 may use a category acquiring tool "mkcls" (see URL: "http://www.statmt.org/moses/giza/mkcls.html"). The category acquiring unit 113 acquires, for example, a category indicating that the category is "unknown" (e.g., "CN") for an element whose category cannot be seen. The method for acquiring a word category is a known technique, and thus a detailed description thereof has been omitted.

The category is the type of element, and may be referred to as an attribute of an element. However, the category is not a part of speech. The category may be considered as, for example, information indicating the class of an element, information added to a group of two or more elements, information added to a semantic group of elements, or the like. For example, the category of an element "sheep" is "animal", but the category may be a symbol "C0", "C1", or the like.

The category inserting unit 114 acquires a second analysis result in which the categories of the elements constituting the first analysis result are respectively inserted between the elements and the parts of speech thereof.

The category inserting unit 114 typically respectively inserts the categories of the elements between the elements and the parts of speech of the elements, the elements respectively corresponding to the one or more categories acquired by the category acquiring unit 113, and constituting the first analysis result, thereby acquiring a second analysis result. The second analysis result may be considered as a group of two or more partial trees constituting the second analysis result.

The category inserting unit 114 inserts the categories typically after the syntax analysis processing by the syntax analyzing unit 112, but may add the categories to elements before the syntax analysis processing. That is to say, there is no limitation on the order between the processing by the category inserting unit 114 and the processing by the syntax analyzing unit 112.

The learning unit 115 outputs the second analysis result acquired by the category inserting unit 114. The output is typically accumulating in a storage medium. The output is a concept that encompasses display on a display screen, projection using a projector, printing by a printer, output of a sound, transmission to an external apparatus, delivery of a processing result to another processing apparatus or another program, and the like.

The parallel corpus 12 has one or at least two pairs of parallel sentences. Each of the pairs of parallel sentences is a pair of a source language sentence and a target language sentence.

In the element pair storage unit 13, one or more element pairs, each of which is a pair of a source language element and a target language element, can be stored. The element pair storage unit 13 is, for example, a dictionary in which one or more word pairs, each of which is a pair of a source language word and a target language word, are stored.

In the third analysis result storage unit 14, one or more third analysis results can be stored. The third analysis results are information in which flags are added to the respective one or more binary trees contained in the second analysis result. Each of the flags is information indicating to swap a binary tree, or information indicating not to swap a binary tree. For example, a flag indicating that swap is to be performed is "SW", and a flag indicating that swap is not to be performed is "ST". The swapping a binary tree is switching the order (word order) of child nodes constituting the binary tree. A flag is typically associated with the parent node of the binary tree. Note that it is sufficient that the flag is associated with the binary tree.

The target language element acquiring unit 15 acquires target language elements respectively corresponding to one or more elements constituting the source language sentence, from the element pair storage unit 13. The target language element acquiring unit 15 typically acquires target language elements respectively corresponding to elements that are one or more nodes constituting the second analysis result, from the element pair storage unit 13. The elements that are nodes constituting the second analysis result are source language elements.

The determining unit 16 determines whether or not to swap each of the one or more binary trees constituting the second analysis result. Specifically, the determining unit 16 performs determination on a binary tree that is currently being processed, as to whether or not to swap each of the one or more binary trees during translation of the source language sentence into a target language sentence, based on the word order of one or more source language elements and the word order of one or more target language elements. The target language elements are information acquired by the target language element acquiring unit 15. Specifically, the determining unit 16 determines whether or not to swap each of the one or more binary trees during translation of the source language sentence into a target language sentence, based on the word orders of the one or more target language elements acquired by the target language element acquiring unit 15 and the one or more elements constituting the target language sentence.

The flag adding unit 17 adds flags, which are results of the determination by the determining unit 16, respectively in association with the one or more binary trees, thereby acquiring a third analysis result. The adding a flag in association with a binary tree is typically adding a flag in association with the parent node of the binary tree.

The flag adding unit 17 may accumulate the acquire third analysis result in the third analysis result storage unit 14, or may write the flags respectively in association with the one or more binary trees constituting the second analysis result, to the second analysis result storage unit 110.

The second analysis result storage unit 110, the parallel corpus 12, the element pair storage unit 13, and the third analysis result storage unit 14 are preferably non-volatile storage media, but may also be realized by volatile storage media.

There is no limitation on the procedure in which the second analysis result and the like are stored in the second analysis result storage unit 110 and the like. For example, the second analysis result and the like may be stored in the second analysis result storage unit 110 and the like via a storage medium, the second analysis result and the like transmitted via a communication line or the like may be stored in the second analysis result storage unit 110 and the like, or the second analysis result and the like input via an input device may be stored in the second analysis result storage unit 110 and the like.

The syntax analyzing unit 112, the category acquiring unit 113, the category inserting unit 114, the learning unit 115, the target language element acquiring unit 15, the determining unit 16, and the flag adding unit 17 may be realized typically by MPUs, memories, or the like. Typically, the processing procedure of the syntax analyzing unit 112 is realized by software, and the software is stored in a storage medium such as a ROM. Note that the syntax analyzing unit 112 and the like may be realized also by hardware (dedicated circuits).

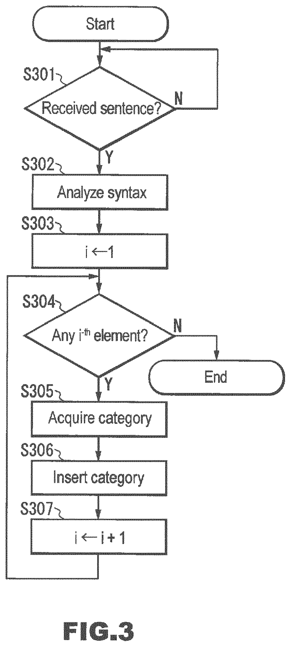

Next, an operation of the syntax analyzing device 11 will be described with reference to the flowchart in FIG. 3.
(Step S301) The receiving unit 111 determines whether or not it has received a sentence. If it has received a sentence, the procedure advances to step S302, and, if not, the procedure returns to step S301. The sentence that is received is typically a source language sentence that is to be translated.
(Step S302) The syntax analyzing unit 112 analyzes the syntax of the sentence received in step S301, thereby acquiring a first analysis result.
(Step S303) The category acquiring unit 113 substitutes 1 for a counter i.
(Step S304) The category acquiring unit 113 determines whether or not there is an i^{-th} element constituting the sentence received in step S301. If there is an i^{-th} element, the procedure advances to step S305, and, if not, the procedure is ended. The element constituting the sentence received in step S301 may be referred to as an element constituting the first analysis result.
(Step S305) The category acquiring unit 113 acquires a category of the i^{-th} element constituting the sentence received in step S301.
(Step S306) The category inserting unit 114 inserts the category acquired in step S305 between the i^{-th} element constituting the first analysis result and the part of speech thereof.
(Step S307) The category acquiring unit 113 increments the counter i by 1. The procedure returns to step S304.

Note that the category inserting unit 114 acquires a second analysis result through the processing in step S306 of the flowchart in FIG. 3.

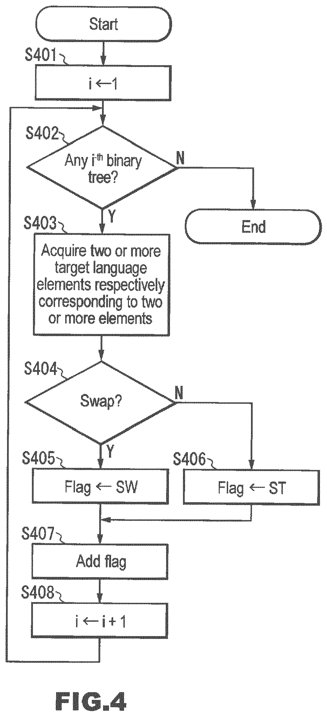

Next, an operation of the learning device 1 will be described with reference to the flowchart in FIG. 4.
(Step S401) The target language element acquiring unit 15 substitutes 1 for a counter i.
(Step S402) The target language element acquiring unit 15 determines whether or not there is an i^{-th} binary tree in the second analysis result storage unit 110. If there is an i^{-th} binary tree, the procedure advances to step S403, and, if not, the procedure is ended.
(Step S403) The target language element acquiring unit 15 acquires two or more target language elements respectively corresponding to two or more elements (the elements are source language elements) among the nodes constituting the i^{-th} binary tree, from the element pair storage unit 13.
(Step S404) The determining unit 16 determines whether or not to swap the binary tree, based on the word order of the two or more source language elements constituting the i^{-th} binary tree and the word order of the two or more target language elements. If it is determined that swap is to be performed, the procedure advances to step S405, and, if not, the procedure advances to step S406. The word order of the two or more source language elements constituting the binary tree can be acquired from the source language sentences in the parallel corpus 12. The word order of the two or more target language elements can be acquired from the target language sentences in the parallel corpus 12.
(Step S405) The flag adding unit 17 acquires a flag indicating that swap is to be performed ("SW" in this example), as a flag.
(Step S406) The flag adding unit 17 acquires a flag indicating that swap is not to be performed ("ST" in this example), as a flag.
(Step S407) The flag adding unit 17 adds the flag acquired in step S405 or step S406 to the i^{-th} binary tree. The flag adding unit 17 typically adds the flag to the parent node of the i^{-th} binary tree.
(Step S408) The target language element acquiring unit 15 increments the counter i by 1. The procedure returns to step S402.

Note that a third analysis result is acquired through the processing in step S407 in FIG. 4. The third analysis result is typically accumulated in the third analysis result storage unit 14.

Hereinafter, a specific operation of the syntax analyzing device 11 in this embodiment will be described.

It is assumed that a pair of parallel sentences consisting of a source language sentence "This is a pen." and a target language sentence *"koreha pen desu."* is stored in the parallel corpus 12.

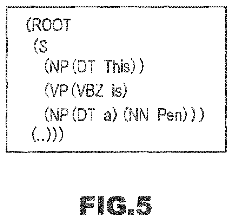

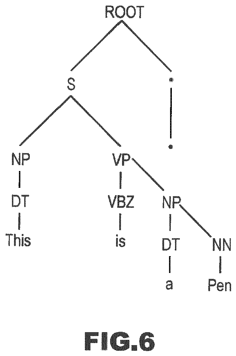

In this situation, the syntax analyzing device 11 analyzes the syntax of the source language sentence, thereby acquiring a first analysis result shown in FIG. 5. FIG. 6 is a diagram showing the first analysis result in a graphic tree structure.

Next, it is assumed that the category acquiring unit 113 acquires a category "C0" of the first element "This". Next, the category inserting unit 114 inserts the category "C0" between the first element "This" and the part of speech "DT" constituting the first analysis result.

Next, it is assumed that the category acquiring unit 113 acquires a category "C1" of the second element "is". Next, the category inserting unit 114 inserts the category "C1" between the second element "is" and the part of speech "VBZ" constituting the first analysis result.

Next, it is assumed that the category acquiring unit 113 acquires a category "C2" of the third element "a". Next, the category inserting unit 114 inserts the category "C2" between the third element "a" and the part of speech "DT" constituting the first analysis result.

Furthermore, it is assumed that the category acquiring unit 113 acquires a category "C3" of the fourth element "pen". Next, the category inserting unit 114 inserts the category "C3" between the fourth element "pen" and the part of speech "NN" constituting the first analysis result.

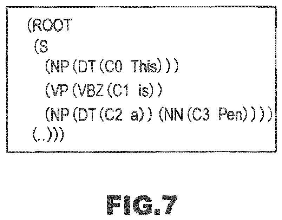

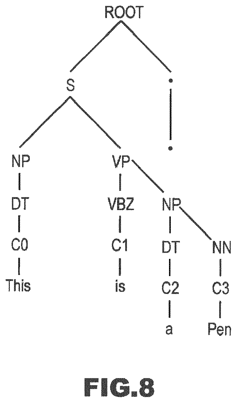

The category inserting unit 114 acquires a second analysis result shown in FIG. 7 through the above-described processing. FIG. 8 is a diagram showing the second analysis result in a graphic tree structure.

Next, a specific operation of the learning device 1 in this embodiment will be described.

First, the target language element acquiring unit 15 acquires the first binary tree (binary tree having ROOT as a parent). The determining unit 16 determines not to swap the binary tree, based on the order of the two or more source language elements constituting the first binary tree and the order of the two or more target language elements, using the source language sentence and the target language sentence in the parallel corpus 12. Next, the flag adding unit 17 acquires a flag indicating that swap is not to be performed ("ST" in this example), as a flag. The flag adding unit 17 adds the acquired flag "ST" to the parent node "ROOT" of the first binary tree.

Next, the target language element acquiring unit 15 acquires the second binary tree (binary tree having S as a parent). The determining unit 16 determines not to swap the binary tree, based on the order of the two or more source language elements constituting the second binary tree and the order of the two or more target language elements, using the source language sentence and the target language sentence in the parallel corpus 12. Next, the flag adding unit 17 acquires a flag "ST". The flag adding unit 17 adds the acquired flag "ST" to the parent node "S" of the second binary tree.

Next, the target language element acquiring unit 15 acquires the third binary tree (binary tree having VP as a parent). Next, the target language element acquiring unit 15 acquires target language elements *"pen desu"* corresponding to three elements among the nodes constituting the third binary tree, from the element pair storage unit 13.

Next, the determining unit 16 determines to swap the binary tree, using the order of the three elements "is a pen" constituting the source language sentence and the order of the elements *"pen desu"* constituting the target language sentence in the parallel corpus 12. The determining unit 16 recognizes that the word order of *"desu"* corresponding to "is" and *"pen"* corresponding to "pen" is opposite between the source language sentence and the target language sentence, and determines to swap the binary tree.

Next, the flag adding unit 17 acquires a flag indicating that swap is to be performed ("SW" in this example), as a flag. The flag adding unit 17 adds the acquired flag "SW" to the parent node "VP" of the third binary tree.

Next, the target language element acquiring unit 15 acquires the fourth binary tree (binary tree having NP as a parent). The determining unit 16 determines not to swap the binary tree, based on the order of the two or more source language elements constituting the fourth binary tree and the order of the two or more target language elements, using the source language sentence and the target language sentence in the parallel corpus 12. Next, the flag adding unit 17 acquires a flag "ST". The flag adding unit 17 adds the acquired flag "ST" to the parent node "NP" of the fourth binary tree.

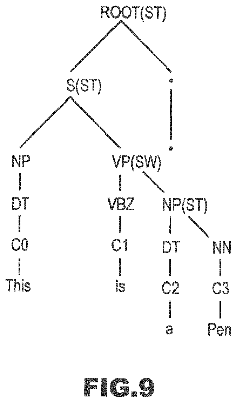

A third analysis result shown in FIG. 9 is acquired through the above-described processing. It is assumed that the third analysis result is accumulated in the third analysis result storage unit 14.

As described above, according to this embodiment, the syntax analyzing device 11 can provide a syntax analysis technique, for example, for learning a binary tree with which a source language sentence can be reordered to match the word order on the target language side at a very high level of precision.

Furthermore, according to this embodiment, the learning device 1 can learn a binary tree with which a source language sentence can be reordered to match the word order on the target language side at a very high level of precision.

Note that the result of the syntax analysis by the syntax analyzing device 11 can be used also in processing other than machine translation. The processing other than machine translation is, for example, speech translation, full-text search, or the like.

The processing in this embodiment may be realized by software. The software may be distributed by software downloads or the like. Furthermore, the software may be distributed in a form where the software is stored in a storage medium such as a CD-ROM. Note that the same is applied to other embodiments described in this specification. The software that realizes the syntax analyzing device 11 in this embodiment may be the following sort of program. Specifically, this program is a program for causing a computer to function as: a receiving unit that receives a sentence; a syntax analyzing unit that analyzes syntax of the sentence received by the receiving unit, thereby acquiring a first analysis result, which is an analysis result having one or more elements constituting the sentence and parts of speech of the respective one or more elements and has one or more binary trees each having the parts of speech or the elements as nodes; a category acquiring unit that acquires categories of the respective one or more elements constituting the sentence received by the receiving unit; and a category inserting unit that acquires a second analysis result in which the categories of the elements are respectively inserted between the elements and the parts of speech of the elements, the elements respectively corresponding to the one or more categories acquired by the category acquiring unit, and constituting the first analysis result.

The software that realizes the learning device 1 may be the following sort of program. Specifically, this program is a program, using a computer-accessible storage medium including a parallel corpus having a pair of parallel sentences, which is a pair of a source language sentence and a target language sentence, an element pair storage unit in which one or more element pairs, each of which is a pair of a source language element and a target language element, are stored, and a second analysis result storage unit in which a second analysis result, which is a result of the processing on the source language sentence by the syntax analyzing device according to claim 1 and has one or more binary trees each having parts of speech, elements, or categories as nodes, and which is output by a learning unit of the syntax analyzing device according to claim 1, is stored, the program causing a computer to function as: a target language element acquiring unit that acquires target language elements respectively corresponding to one or more source language elements that are one or more nodes constituting the second analysis result, from the element pair storage unit; a determining unit that determines whether or not to swap each of the one or more binary trees constituting the second analysis result during translation of the source language sentence into a target language sentence, based on word orders of the one or more target language elements acquired by the target language element acquiring unit and the one or more elements constituting the target language sentence; and a flag adding unit that adds flags, which are results of the determination by the determining unit, respectively in association with the one or more binary trees, thereby acquiring a third analysis result.

### Embodiment 2

In this embodiment, a machine translation device that performs machine translation using a binary tree learned by the learning device 1 of Embodiment 1 will be described.

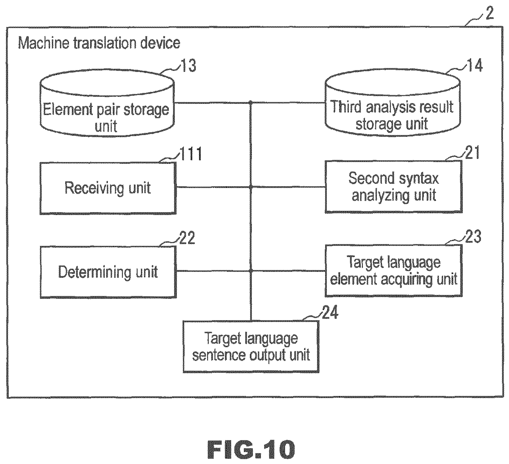

FIG. 10 is a block diagram of a machine translation device 2 in this embodiment. The machine translation device 2 includes the element pair storage unit 13, the third analysis result storage unit 14, the receiving unit 111, a second syntax analyzing unit 21, a determining unit 22, a target language element acquiring unit 23, and a target language sentence output unit 24. The second syntax analyzing unit 21 typically has the same configuration as that of the syntax analyzing device 11.

The second syntax analyzing unit 21 analyzes the syntax of the source language sentence received by the receiving unit 111, using the syntax analyzing device 11, thereby acquiring a second analysis result. The second syntax analyzing unit 21 may have the same configuration as that of the syntax analyzing device 11.

The determining unit 22 determines whether or not to swap each of one or more binary trees constituting the second analysis result acquired by the second syntax analyzing unit 21, using flags added to binary trees contained in the one or more third analysis results stored in the third analysis result storage unit 14. The determining unit 22 may determine whether or not to swap the binary trees, using a machine learning algorithm. The determining unit 22 may determine whether or not to swap the binary trees, using a neural network algorithm. Regarding a neural network, for example, see "URL: http://nlg.isi.edu/software/nplm/".

The target language element acquiring unit 23 acquires target language elements respectively corresponding to one or more elements constituting the source language sentence, from the element pair storage unit 13. The target language element acquiring unit 23 acquires target language elements respectively corresponding to one or more elements constituting the source language sentence having the word order according to results of the determination by the determining unit 22, from the element pair storage unit 13.

The target language sentence output unit 24 links the one or more target language elements acquired by the target language element acquiring unit 23 according to the word order, and outputs a target language sentence. The output is a concept that encompasses display on a display screen, projection using a projector, printing by a printer, output of a sound, transmission to an external apparatus, accumulation in a storage medium, delivery of a processing result to another processing apparatus or another program, and the like.

The second syntax analyzing unit 21, the determining unit 22, and the target language element acquiring unit 23 may be realized typically by MPUs, memories, or the like. Typically, the processing procedure of the second syntax analyzing unit 21 is realized by software, and the software is stored in a storage medium such as a ROM. Note that the second syntax analyzing unit 21 and the like may be realized also by hardware (dedicated circuits).

The target language sentence output unit 24 may be considered to include or not to include an output device such as a display screen or a speaker. The target language sentence output unit 24 may be realized, for example, by driver software for an output device, a combination of driver software for an output device and the output device, or the like.

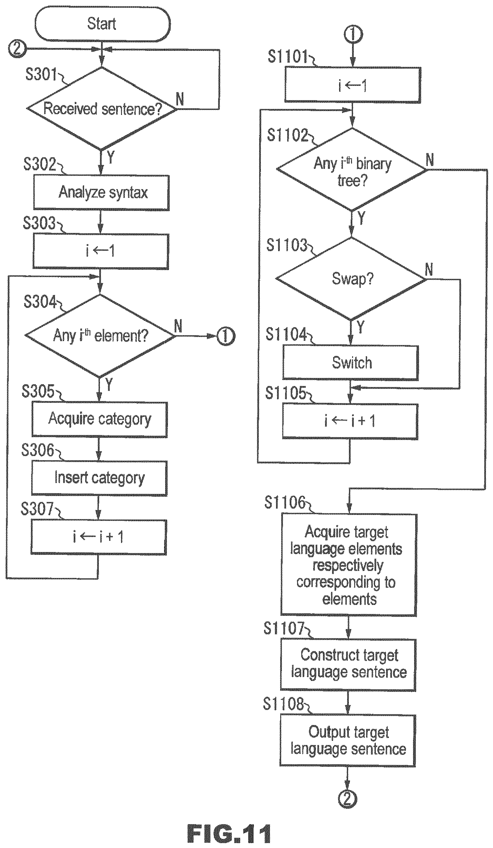

Next, an operation of the machine translation device 2 will be described with reference to the flowchart in FIG. 11. In the flowchart in FIG. 11, a description of the same steps as in the flowchart in FIG. 3 has been omitted.
(Step S1101) The determining unit 22 substitutes 1 for a counter i.
(Step S1102) The determining unit 22 determines whether or not there is an i^{-th} binary tree in the second analysis result acquired by the second syntax analyzing unit 21. If there is an i^{-th} binary tree, the procedure advances to step S1103, and, if not, the procedure advances to step S1107.
(Step S1103) The determining unit 22 determines whether or not to swap the i^{-th} binary tree. The determining unit 22 determines whether or not to swap the i^{-th} binary tree, using flags added to binary trees contained in the one or more third analysis results stored in the third analysis result storage unit 14. If it is determined that swap is to be performed, the procedure advances to step S1104, and, if not, the procedure advances to step S1106.
(Step S1104) The determining unit 22 switches the order in the i^{-th} binary tree. The switching the order in a binary tree (swapping) is switching the order of two child nodes of the binary tree.
(Step S1105) The determining unit 22 increments the counter i by 1. The procedure returns to step S1102.
(Step S1106) The target language element acquiring unit 23 acquires target language elements respectively corresponding to one or more elements constituting the source language sentence having the word order according to results of the determination by the determining unit 22, from the element pair storage unit 13.
(Step S1107) The target language sentence output unit 24 links the one or more target language elements acquired by the target language element acquiring unit 23 according to the word order, thereby constructing a target language sentence.
(Step S1108) The target language sentence output unit 24 outputs the target language sentence constructed in step S1107. The procedure returns to step S301.

Note that the procedure is terminated by powering off or an interruption at the end of the process in the flowchart in FIG. 11.

As described above, according to this embodiment, it is possible to reorder a source language sentence to match the word order on the target language side at a very high level of precision, and thus it is possible to perform machine translation at a high level of precision.

Note that the software that realizes the machine translation device 2 in this embodiment may be the following sort of program. Specifically, this program is a program, using a computer-accessible storage medium including an element pair storage unit in which one or more element pairs, each of which is a pair of a source language element and a target language element, are stored, and a third analysis result storage unit in which one or more third analysis results are stored, the program causing a computer to function as: a receiving unit that receives a source language sentence; a second syntax analyzing unit that analyzes syntax of the source language sentence received by the receiving unit, using the syntax analyzing device according to claim 1, thereby acquiring a second analysis result; a determining unit that determines whether or not to swap each of one or more binary trees constituting the second analysis result, using flags added to the binary trees contained in the one or more third analysis results; a target language element acquiring unit that acquires target language elements respectively corresponding to one or more elements constituting the source language sentence having a word order according to results of the determination by the determining unit, from the element pair storage unit; and a target language sentence output unit that links the one or more target language elements acquired by the target language element acquiring unit according to the word order, and outputs a target language sentence.

### Embodiment 3

In this embodiment, a learning device that learns a reordering rule by performing reordering of a group of three parts of speech while minimizing word intersections will be described. The group of three parts of speech is three parts of speech constituting a binary tree, and consists of a part of speech of a parent node and parts of speech of two child nodes.

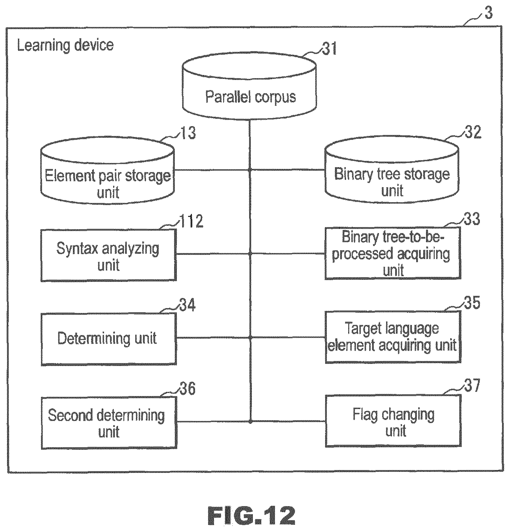

FIG. 12 is a block diagram of a learning device 3 in this embodiment. The learning device 3 includes a parallel corpus 31, the element pair storage unit 13, a binary tree storage unit 32, the syntax analyzing unit 112, a binary tree-to-be-processed acquiring unit 33, a determining unit 34, a target language element acquiring unit 35, a second determining unit 36, and a flag changing unit 37.

The parallel corpus 31 has a pair of parallel sentences, which is a pair of a source language sentence and a target language sentence. The parallel corpus 31 has one or at least two pairs of parallel sentences. The source language sentence and the target language sentence may not be a complete sentence, and may be part of a sentence.

In the binary tree storage unit 32, one or more binary trees can be stored, each of which is a binary tree constituting a syntax analysis result of a source language sentence, in which all of a parent node and two child nodes are parts of speech, and having, in association therewith, a flag indicating whether or not to swap the binary tree during translation of the source language sentence into a target language sentence. The flag associated with each binary tree is typically associated with the parent node of the binary tree.

The binary tree-to-be-processed acquiring unit 33 acquires one or more binary trees, each of which is a binary tree constituting the first analysis result acquired by the syntax analyzing unit 112, and in which all of a parent node and two child nodes are parts of speech.

The determining unit 34 determines whether or not to swap each of the one or more binary trees acquired by the binary tree-to-be-processed acquiring unit 33, using the one or more binary trees in the binary tree storage unit 32. The determining unit 34 may determine whether or not to swap the binary trees, for example, using a machine learning algorithm. The determining unit 34 may determine whether or not to swap the binary trees, using a neural network algorithm.

The target language element acquiring unit 35 acquires target language elements respectively corresponding to two source language elements, from the element pair storage unit 13. The target language element acquiring unit 35 acquires target language elements respectively corresponding to two source language elements respectively corresponding to child nodes of each of the one or more binary trees, from the element pair storage unit 13.

The second determining unit 36 determines whether or not the word order of the two source language elements reflecting a result of the determination by the determining unit 34 is the same as the word order of the two target language elements respectively corresponding to the two source language elements.

If the second determining unit 36 determines that the word orders are not the same, the flag changing unit 37 changes a value of a flag at the parent node constituting the binary tree corresponding to the determination, to the opposite value.

The parallel corpus 31, the element pair storage unit 13, and the binary tree storage unit 32 are preferably non-volatile storage media, but may also be realized by volatile storage media.

There is no limitation on the procedure in which the information is stored in the parallel corpus 31 and the like. For example, the information may be stored in the parallel corpus 31 and the like via a storage medium, the information transmitted via a communication line or the like may be stored in the parallel corpus 31 and the like, or the information input via an input device may be stored in the parallel corpus 31 and the like.

The binary tree-to-be-processed acquiring unit 33, the determining unit 34, the target language element acquiring unit 35, the second determining unit 36, and the flag changing unit 37 may be realized typically by MPUs, memories, or the like. Typically, the processing procedure of the binary tree-to-be-processed acquiring unit 33 and the like is realized by software, and the software is stored in a storage medium such as a ROM. Note that the binary tree-to-be-processed acquiring unit 33 and the like may be realized also by hardware (dedicated circuits).

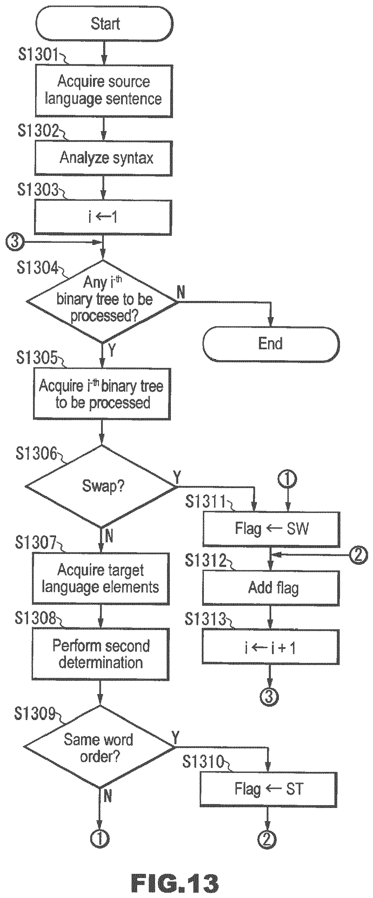

Next, an operation of the learning device 3 shown in FIG. 12 will be described with reference to the flowchart in FIG. 13.
(Step S1301) The syntax analyzing unit 112 acquires a source language sentence in the parallel corpus 31. In this example, one pair of parallel sentences in the parallel corpus 31 is to be processed.
(Step S1302) The syntax analyzing unit 112 analyzes the syntax of the source language sentence acquired in step S1301, thereby acquiring a first analysis result.
(Step S1303) The binary tree-to-be-processed acquiring unit 33 substitutes 1 for a counter i.
(Step S1304) The binary tree-to-be-processed acquiring unit 33 determines whether or not there is a binary tree that is an i^{-th} binary tree and in which all of a parent node and two child nodes are parts of speech, in the first analysis result acquired in step S1302. If there is such an i^{-th} binary tree that is to be processed, the procedure advances to step S1305, and, if not, the procedure is ended.
(Step S1305) The binary tree-to-be-processed acquiring unit 33 acquires the i^{-th} binary tree that is to be processed, from the first analysis result acquired in step S1302.
(Step S1306) The determining unit 34 determines whether or not to swap the i^{-th} binary tree that is to be processed acquired in step S1305, using the binary trees in the binary tree storage unit 32 (in which syntax analysis results of source language sentences are stored). If it is determined not to perform swap, the procedure advances to step S1307, and, if it is determined that swap is to be performed, the procedure advances to step S1311.
(Step S1307) The target language element acquiring unit 35 acquires target language elements respectively corresponding to one or more elements constituting the i^{-th} binary tree that is to be processed, from the element pair storage unit 13.
(Step S1308) The second determining unit 36 determines whether or not the word order of the two source language elements reflecting a result of the determination by the determining unit 34 is the same as the word order of the two target language elements respectively corresponding to the two source language elements. That is to say, the second determining unit 36 determines whether or not the arrangement of the source language elements and the arrangement of the target language elements intersect each other.
(Step S1309) If it is determined in step S1308 that the word orders are the same (the arrangements do not intersect each other), the procedure advances to step S1310, and, if it is determined that the word orders are different (the arrangements intersect each other), the procedure advances to step S1311.
(Step S1310) The flag changing unit 37 acquires a flag indicating that swap is not to be performed ("ST" in this example), and the procedure advances to step S1312.
(Step S1311) The flag changing unit 37 acquires a flag indicating that swap is to be performed ("SW" in this example).
(Step S1312) The flag changing unit 37 adds the acquired flag in association with the i^{-th} binary tree that is to be processed.
(Step S1313) The binary tree-to-be-processed acquiring unit 33 increments the counter i by 1. The procedure returns to step S1304.

Hereinafter, a specific operation of the learning device 3 in this embodiment will be described.

It is assumed that "<source language sentence> ate orange, <target language sentence> *orenjiwo tabeta"* is stored in the parallel corpus 31.

Furthermore, it is assumed that element pairs such as "<source language> orange, <target language> *orenji"* and "<source language> ate, <target language> *tabeta"* are stored in the element pair storage unit 13.

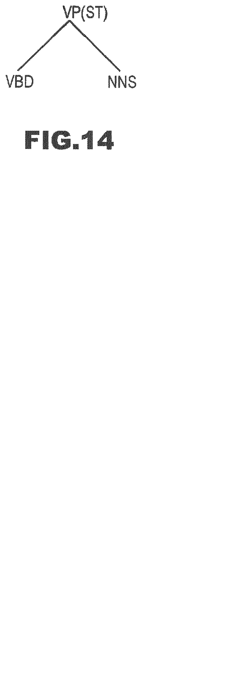

Furthermore, it is assumed that a binary tree in which all of a parent node and two child nodes are parts of speech, and having a flag indicating whether or not to swap the binary tree (see FIG. 14) is stored in the binary tree storage unit 32.

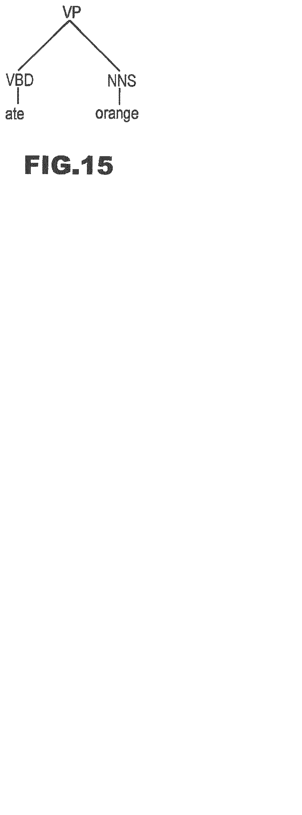

In this situation, the syntax analyzing unit 112 analyzes the syntax of the source language sentence in the parallel corpus 31, thereby acquiring a first analysis result. FIG. 15 shows the first analysis result.

Next, the binary tree-to-be-processed acquiring unit 33 acquires a binary tree that is to be processed in FIG. 15.

Next, the determining unit 34 determines not to swap the binary tree acquired by the binary tree-to-be-processed acquiring unit 33, using the binary trees in the binary tree storage unit 32 (in particular, the binary tree in FIG. 14).

Next, the target language element acquiring unit 35 acquires target language elements *"orenji"* and "*tabeta"* respectively corresponding to one or more elements constituting the binary tree that is to be processed in FIG. 15, from the element pair storage unit 13.

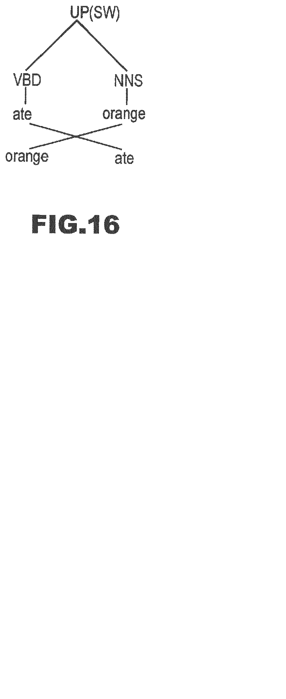

Next, the second determining unit 36 determines that the word order of the two source language elements "ate orange" reflecting the result of the determination by the determining unit 34 is different from (intersects) the word order of the two target language elements *"orenji"* and "*tabeta"* respectively corresponding to the two source language elements, using the pair of parallel sentences "<source language sentence> ate orange, <target language sentence> *orenjiwo tabeta"* in the parallel corpus 31 (see FIG. 16).

Next, the flag changing unit 37 acquires a flag indicating that swap is to be performed ("SW" in this example), as a flag.

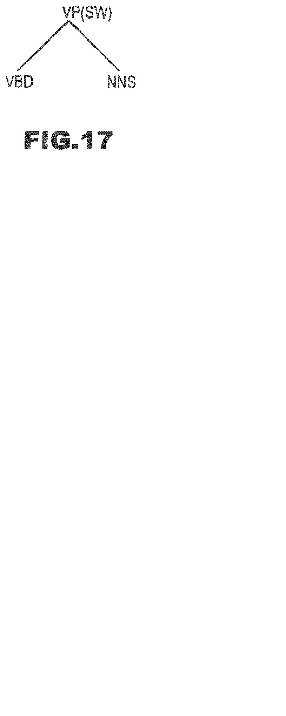

Next, the flag changing unit 37 adds the flag "SW" in association with the binary tree that is to be processed in FIG. 14. Thus, the flag changing unit 37 acquires a flagged binary tree shown in FIG. 17.

As described above, according to this embodiment, the learning device 3 can learn a binary tree with which a source language sentence can be reordered to match the word order on the target language side at a very high level of precision.

The software that realizes the learning device 3 in this embodiment may be the following sort of program. Specifically, this program is a program, using a computer-accessible storage medium including a parallel corpus having a pair of parallel sentences, which is a pair of a source language sentence and a target language sentence, an element pair storage unit in which one or more element pairs, each of which is a pair of a source language element and a target language element, are stored, and a binary tree storage unit in which one or more binary trees are stored, each of which is a binary tree constituting a syntax analysis result of a source language sentence, in which all of a parent node and two child nodes are parts of speech, and having, in association therewith, a flag indicating whether or not to swap the binary tree during translation of the source language sentence into a target language sentence, the program causing a computer to function as: a syntax analyzing unit that analyzes syntax of the source language sentence, thereby acquiring a first analysis result, which is an analysis result having one or more elements constituting the sentence and parts of speech of the respective one or more elements and has one or more binary trees each having the parts of speech or the elements as nodes; a binary tree-to-be-processed acquiring unit that acquires one or more binary trees, each of which is a binary tree constituting the first analysis result, and in which all of a parent node and two child nodes are parts of speech; a determining unit that determines whether or not to swap each of the one or more binary trees acquired by the binary tree-to-be-processed acquiring unit, using the one or more binary trees in the binary tree storage unit; a target language element acquiring unit that acquires target language elements respectively corresponding to two source language elements respectively corresponding to child nodes of each of the one or more binary trees, from the element pair storage unit; a second determining unit that determines whether or not a word order of the two source language elements reflecting a result of the determination by the determining unit is the same as a word order of the two target language elements respectively corresponding to the two source language elements; and a flag changing unit that, in a case where the second determining unit determines that the word orders are not the same, changes a value of a flag at the parent node constituting the binary tree corresponding to the determination, to the opposite value.

### Embodiment 4

In this embodiment, a reordering rule learning device that determines whether or not to perform swap, using at least four or more features among 15 features described later and learns a reordering rule will be described.

Furthermore, in this embodiment, a reordering rule learning device also using categories of elements will be described.

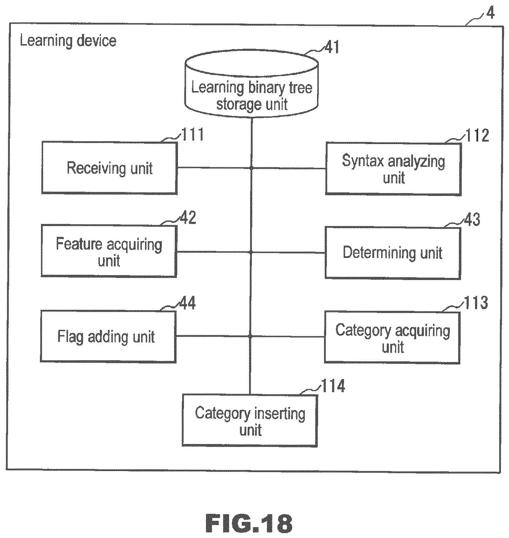

FIG. 18 is a block diagram of a learning device 4 in this embodiment. The learning device 4 includes a learning binary tree storage unit 41, the receiving unit 111, the syntax analyzing unit 112, a feature acquiring unit 42, a determining unit 43, a flag adding unit 44, the category acquiring unit 113, and the category inserting unit 114.

In the learning binary tree storage unit 4, one or at least two binary trees are stored. Each binary tree is a binary tree having one or more source language elements or parts of speech of the respective one or more elements as nodes. The binary tree is typically a binary tree constituting a tree structure that is a syntax analysis result of a source language sentence. The binary tree preferably has categories of elements between the elements and parts of speech thereof. All binary trees preferably have categories of elements. Note that there may be a binary tree having no category.

Furthermore, a parent node constituting a binary tree has 15 features (1) to (15) below.

(1) Grandfather, (2) Parent, (3) Myself, (4) Previous sibling of myself, (5) Next sibling of myself, (6) Left child, (7) Right child, (8) Leftmost child of left child, (9) Rightmost child of left child, (10) Leftmost child of right child, (11) Rightmost child of right child, (12) Leftmost word of word string dominated by left child, (13) Rightmost word of word string dominated by left child, (14) Leftmost word of word string dominated by right child, and (15) Rightmost word of word string dominated by right child

Note that, for example, the features (1) to (15) of the parent node (VP) of the binary tree constituting the tree structure in FIG. 9 are as follows.
(1) Grandfather ... ROOT
(2) Parent... S
(3) Myself... VP
(4) Previous sibling of myself... NP
(5) Next sibling of myself... NULL
(6) Left child ... VBZ
(7) Right child ... NP
(8) Leftmost child of left child C1
(9) Rightmost child of left child ... NULL
(10) Leftmost child of right child ... DT
(11) Rightmost child of right child ... NN
(12) Leftmost word of word string dominated by left child ... is
(13) Rightmost word of word string dominated by left child ... NULL
(14) Leftmost word of word string dominated by right child ... a
(15) Rightmost word of word string dominated by right child ... pen

It is sufficient that the parent node of the binary tree has four or more features among the 15 features. The binary tree has, in association therewith, a flag indicating whether or not to swap the binary tree. In FIG. 9, the flag of this binary tree is "SW". The flag associated with the binary tree is typically associated with the parent node of the binary tree. Some of the 15 or less features associated with the binary tree may be NULL (information indicating that the feature has no value).

The feature acquiring unit 42 acquires features that are features of a parent node of each of the one or more binary trees contained in the first analysis result and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child.

The processing for acquiring values of (1) to (15) above corresponding to a node constituting a tree structure (a parent node of a binary tree) is a known technique, and thus a detailed description thereof has been omitted. For example, the processing for acquiring the features (1) to (15) above of the node (VP) of the binary tree is FIG. 9 is a technique for acquiring node values from tree structure information, and is a known technique.

The determining unit 43 determines whether or not to swap each of the one or more binary trees contained in the first analysis result, by applying the four or more features acquired by the feature acquiring unit 42 to the one or more binary trees stored in the learning binary tree storage unit 41.

The determining unit 43 determines whether or not to swap each of the one or more binary trees contained in the first analysis result, for example, using a neural network.

Furthermore, the determining unit 43 may determine whether or not to swap each of the one or more binary trees contained in the first analysis result, for example, using machine learning.

The flag adding unit 44 adds flags, which are results of the determination by the determining unit 43, respectively in association with binary trees constituting the one or more binary trees. The flag adding unit 44 may accumulate the binary trees to which the flags are added, in the learning binary tree storage unit 41. Note that the flag adding unit 44 may accumulate the third analysis result in the third analysis result storage unit 14 (not shown), or may write the flags respectively in association with the one or more binary trees constituting the second analysis result, to the second analysis result storage unit 110.

The being associated with the binary tree is typically being associated with the parent node of the binary tree. It is sufficient that a binary tree and a flag are associated with each other as a result of the flag being added.

The learning binary tree storage unit 41 is preferably a non-volatile storage medium, but may also be realized by a volatile storage medium.

There is no limitation on the procedure in which the binary trees are stored in the learning binary tree storage unit 41. For example, the binary trees may be stored in the learning binary tree storage unit 41 via a storage medium, the binary trees transmitted via a communication line or the like may be stored in the learning binary tree storage unit 41, or the binary trees input via an input device may be stored in the learning binary tree storage unit 41. The binary trees may be manually generated information, or automatically acquired information.

The feature acquiring unit 42, the determining unit 43, and the flag adding unit 44 may be realized typically by MPUs, memories, or the like. Typically, the processing procedure of the feature acquiring unit 42 and the like is realized by software, and the software is stored in a storage medium such as a ROM. Note that the feature acquiring unit 42 and the like may be realized also by hardware (dedicated circuits).

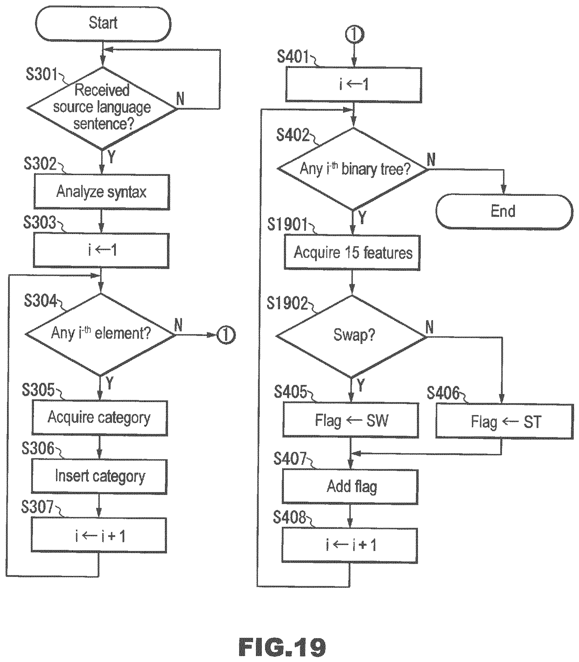

Next, an operation of the learning device 4 shown in FIG. 18 will be described with reference to the flowchart in FIG. 19. In the flowchart in FIG. 19, a description of the same steps as in the flowchart in FIGS. 3 and 4 has been omitted.
(Step S1901) The feature acquiring unit 42 acquires 15 features (the features (1) to (15) above) of a parent node of an i^{-th} binary tree. It is sufficient that the feature acquiring unit 42 acquires four or more features among the features (1) to (15) above.
(Step S1902) The determining unit 43 determines whether or not to swap the i^{-th} binary tree, by applying the four or more features (e.g., 15 features) acquired in step S1901 to the one or more binary trees stored in the learning binary tree storage unit 41. If it is determined that swap is to be performed, the procedure advances to step S405, and, if not, the procedure advances to step S406.

As described above, according to this embodiment, the learning device 4 can learn a binary tree with which a source language sentence can be reordered to match the word order on the target language side at a very high level of precision.

The software that realizes the learning device in this embodiment may be the following sort of program. Specifically, this program is a program, using a computer-accessible storage medium including a learning binary tree storage unit in which one or more binary trees are stored, each of which is a binary tree having one or more source language elements or parts of speech of the respective one or more elements as nodes, has features that are features of a parent node constituting the binary tree and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child, and has, in association therewith, a flag indicating whether or not to swap the binary tree, the program causing a computer to function as: a receiving unit that receives a source language sentence; a syntax analyzing unit that analyzes syntax of the source language sentence received by the receiving unit, thereby acquiring a first analysis result, which is an analysis result having one or more elements constituting the source language sentence and parts of speech of the respective one or more elements and has one or more binary trees each having the parts of speech or the elements as nodes; a feature acquiring unit that acquires features that are features of a parent node of each of the one or more binary trees contained in the first analysis result and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child; a determining unit that determines whether or not to swap each of the one or more binary trees contained in the first analysis result, by applying the four or more features acquired by the feature acquiring unit to the one or more binary trees stored in the learning binary tree storage unit; and a flag adding unit that adds flags, which are results of the determination by the determining unit, respectively in association with binary trees constituting the one or more binary trees.

It is preferable that the program causes the computer to operate such that any one or more binary trees stored in the learning binary tree storage unit have categories of elements between the elements and parts of speech thereof, the computer further functions as: a category acquiring unit that acquires categories of the respective one or more elements constituting the source language sentence received by the receiving unit; and a category inserting unit that respectively inserts the categories acquired by the category acquiring unit between the elements constituting the first analysis result acquired by the syntax analyzing unit and the parts of speech thereof, thereby acquiring a second analysis result, and the determining unit determines whether or not to swap each of the one or more binary trees contained in the second analysis result, by applying the four or more features acquired by the feature acquiring unit to the one or more binary trees stored in the learning binary tree storage unit.

### Embodiment 5

In this embodiment, a machine translation device that determines whether or not to perform swap at a high level of precision, using at least four or more features among the 15 features will be described.

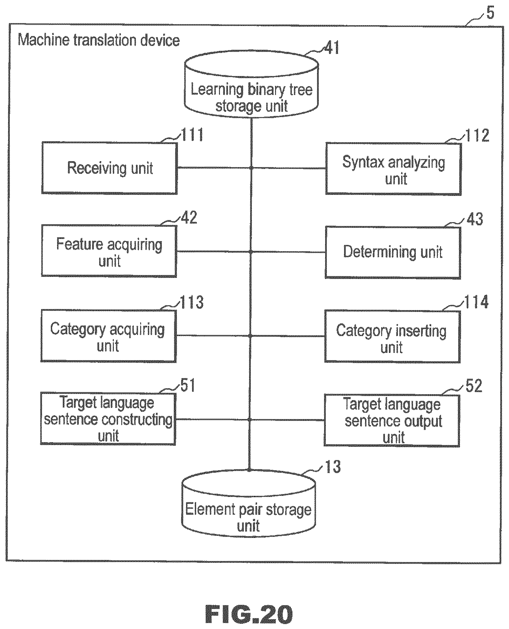

FIG. 20 is a block diagram of a machine translation device 5 in this embodiment. The machine translation device 5 includes the element pair storage unit 13, the learning binary tree storage unit 41, the receiving unit 111, the syntax analyzing unit 112, the category acquiring unit 113, the category inserting unit 114, the feature acquiring unit 42, the determining unit 43, a target language sentence constructing unit 51, and a target language sentence output unit 52.

The target language sentence constructing unit 51 constructs a target language sentence, by acquiring one or more target language elements respectively corresponding to one or more source language elements constituting the source language sentence, in the word order based on results of the determination by the determining unit 43, from the element pair storage unit 13.

The target language sentence constructing unit 51 may be realized typically by an MPU, a memory, or the like. Typically, the processing procedure of the target language sentence constructing unit 51 is realized by software, and the software is stored in a storage medium such as a ROM. Note that the target language sentence constructing unit 51 may be realized also by hardware (a dedicated circuit).

The target language sentence output unit 52 outputs the target language sentence constructed by the target language sentence constructing unit 51. The output is a concept that encompasses display on a display screen, projection using a projector, printing by a printer, output of a sound, transmission to an external apparatus, accumulation in a storage medium, delivery of a processing result to another processing apparatus or another program, and the like.

The target language sentence output unit 52 may be considered to include or not to include an output device such as a display screen or a speaker. The target language sentence output unit 52 may be realized, for example, by driver software for an output device, a combination of driver software for an output device and the output device, or the like.

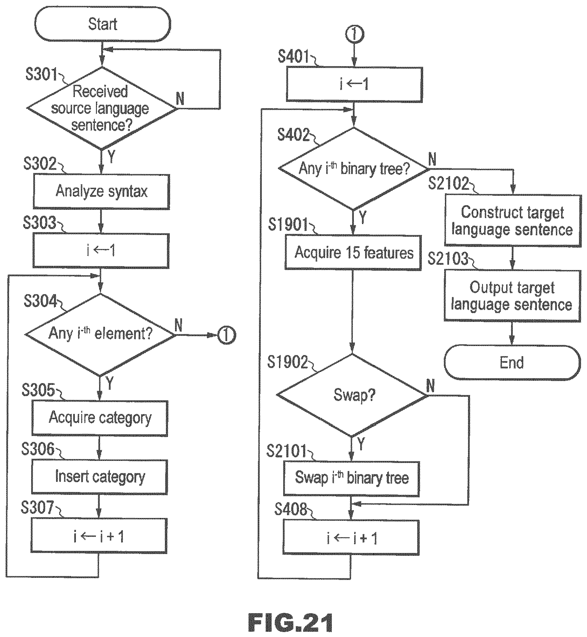

Next, an operation of the machine translation device 5 shown in FIG. 20 will be described with reference to the flowchart in FIG. 21. In the flowchart in FIG. 21, a description of the same steps as in the flowchart in FIGS. 3, 4, and 19 has been omitted.
(Step S2101) The target language sentence constructing unit 51 swaps an i^{-th} binary tree. The procedure advances to step S408.
(Step S2102) The target language sentence constructing unit 51 acquires one or more target language elements respectively corresponding to one or more source language elements constituting the source language sentence. The target language sentence constructing unit 51 constructs a target language sentence by linking the acquired one or more target language elements in the word order based on results of the determination by the determining unit 43. The word order based on results of the determination by the determining unit 43 is the word order of the source language sentence, and is the word order after the determination regarding swap.
(Step S2103) The target language sentence output unit 52 outputs the target language sentence constructed in step S2102. The procedure is ended.

Hereinafter, a specific operation of the machine translation device 5 in this embodiment will be described.

The receiving unit 111 of the machine translation device 5 receives, for example, a source language sentence "This is a pen".

Next, the syntax analyzing unit 112 analyzes the syntax of the source language sentence, thereby acquiring a first analysis result in FIG. 6 (or FIG. 5). Next, a second analysis result in FIG. 8 (or FIG. 7) is acquired through the processing by the category acquiring unit 113 and the category inserting unit 114.

Next, the feature acquiring unit 42 acquires 15 features of each binary tree constituting the second analysis result in FIG. 8. For example, the feature acquiring unit 42 acquires 15 features of the binary tree having the parent node "VP". The features are as follows: (1) a grandfather ... ROOT, (2) a parent... S, (3) myself... VP, (4) a previous sibling of myself... NP, (5) a next sibling of myself ... NULL, (6) a left child ... VBZ, (7) a right child ... NP, (8) a leftmost child of the left child ... C1, (9) a rightmost child of the left child ... NULL, (10) a leftmost child of the right child ... DT, (11) a rightmost child of the right child ... NN, (12) a leftmost word of a word string dominated by the left child ... is, (13) a rightmost word of the word string dominated by the left child ... NULL, (14) a leftmost word of a word string dominated by the right child ... a, and (15) a rightmost word of the word string dominated by the right child ... pen.

Next, for example, the determining unit 43 determines to swap the binary tree having the parent node "VP", by applying the 15 features of the binary tree having the parent node "VP" to the one or more binary trees in the learning binary tree storage unit 41, for example, using a neural network.

The determining unit 43 determines whether or not to swap the other binary trees. It is assumed that the determining unit 43 determines not to swap the binary tree having the parent node "ROOT", the binary tree having the parent node "S", and the binary tree having the parent node "NP".

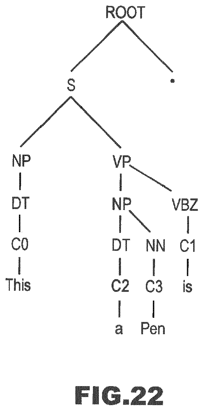

The target language sentence constructing unit 51 acquires a tree structure in FIG. 22, by swapping only the binary tree having the parent node "VP", using results of the determination by the determining unit 43.

Next, the target language sentence constructing unit 51 acquires one or more target language elements respectively corresponding to one or more source language elements constituting the source language sentence, from the element pair storage unit 13. Specifically, the target language sentence constructing unit 51 acquires *"koreha"* corresponding to "This", *"hitotsund'* corresponding to "a", *"pen"* corresponding to "pen", and *"desu"* corresponding to "is", from the element pair storage unit 13.

Next, the target language sentence constructing unit 51 constructs a target language sentence *"koreha hitotsuno pen desu"* by sequentially linking the acquired four target language elements.

Next, the target language sentence output unit 52 outputs the constructed target language sentence *"koreha hitotsuno pen desu".*

As described above, according to this embodiment, it is possible to reorder a source language sentence to match the word order on the target language side at a very high level of precision, and thus it is possible to perform machine translation at a high level of precision.

The software that realizes the machine translation device 5 in this embodiment may be the following sort of program. Specifically, this program is a program, using a computer-accessible storage medium including a learning binary tree storage unit in which one or more binary trees are stored, each of which is a binary tree having one or more source language elements or parts of speech of the respective one or more elements as nodes, has features that are features of a parent node constituting the binary tree and are four or more features among 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child, and has, in association therewith, a flag indicating whether or not to swap the binary tree, the program causing a computer to function as: a receiving unit that receives a source language sentence; a syntax analyzing unit that analyzes syntax of the source language sentence received by the receiving unit, thereby acquiring a first analysis result, which is an analysis result having one or more elements constituting the source language sentence and parts of speech of the respective one or more elements and has one or more binary trees each having the parts of speech or the elements as nodes; a feature acquiring unit that acquires features that are features of a parent node of each of the one or more binary trees contained in the first analysis result and are four or more features among the 15 features consisting of (1) a grandfather, (2) a parent, (3) myself, (4) a previous sibling of myself, (5) a next sibling of myself, (6) a left child, (7) a right child, (8) a leftmost child of the left child, (9) a rightmost child of the left child, (10) a leftmost child of the right child, (11) a rightmost child of the right child, (12) a leftmost word of a word string dominated by the left child, (13) a rightmost word of the word string dominated by the left child, (14) a leftmost word of a word string dominated by the right child, and (15) a rightmost word of the word string dominated by the right child; a determining unit that determines whether or not to swap each of the one or more binary trees contained in the first analysis result, by applying the four or more features acquired by the feature acquiring unit to the one or more binary trees stored in the learning binary tree storage unit; a target language sentence constructing unit that constructs a target language sentence, by acquiring one or more target language elements respectively corresponding to one or more source language elements constituting the source language sentence, in a word order based on results of the determination by the determining unit; and a target language sentence output unit that outputs the target language sentence.

It is preferable that the program causes the computer to operate such that any one or more binary trees stored in the learning binary tree storage unit have categories of elements between the elements and parts of speech thereof, the computer further functions as: a category acquiring unit that acquires categories of the respective one or more elements constituting the source language sentence received by the receiving unit; and a category inserting unit that respectively inserts the categories acquired by the category acquiring unit between the elements constituting the first analysis result acquired by the syntax analyzing unit and the parts of speech thereof, thereby acquiring a second analysis result, and the determining unit determines whether or not to swap each of the one or more binary trees contained in the second analysis result, by applying the four or more features acquired by the feature acquiring unit to the one or more binary trees stored in the learning binary tree storage unit.

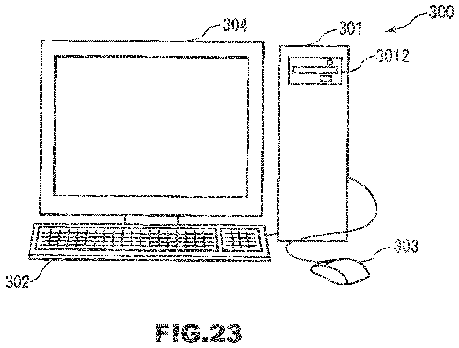

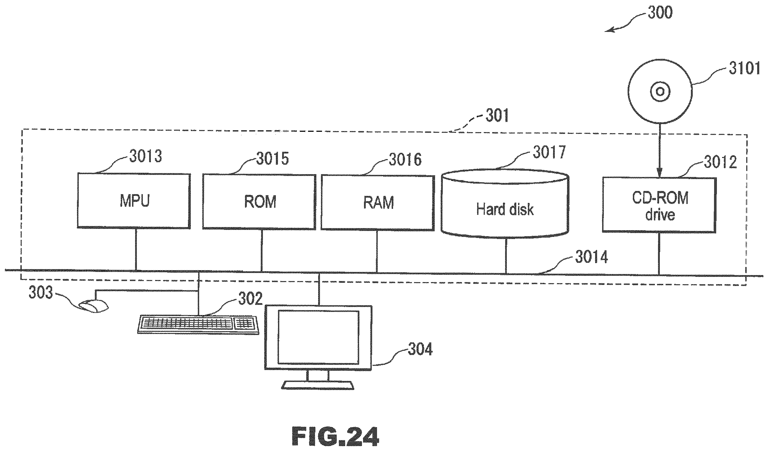

FIG. 23 shows the external appearance of a computer that executes the programs described in this specification to realize the learning device 1 and the like in the foregoing various embodiments. The foregoing embodiments may be realized using computer hardware and a computer program executed thereon. FIG. 23 is a schematic view of a computer system 300. FIG. 24 is a block diagram of the system 300.

In FIG. 23, the computer system 300 includes a computer 301 including a CD-ROM drive 3012, a keyboard 302, a mouse 303, and a monitor 304.

In FIG. 24, the computer 301 includes not only the CD-ROM drive 3012, but also an MPU 3013, a bus 3014 connected to the MPU 3013 and the CD-ROM drive 3012, a ROM 3015 in which a program such as a boot up program is to be stored, a RAM 3016 that is connected to the MPU 3013 and is a memory in which a command of an application program is temporarily stored and a temporary storage area is provided, and a hard disk 3017 in which an application program, a system program, and data are to be stored. Although not shown, the computer 301 may further include a network card that provides connection to a LAN.

The program for causing the computer system 300 to execute the functions of the learning device 1 and the like in the foregoing embodiments may be stored in a CD-ROM 3101 that is inserted into the CD-ROM drive 3012, and be transmitted to the hard disk 3017. Alternatively, the program may be transmitted via a network (not shown) to the computer 301 and stored in the hard disk 3017. At the time of execution, the program is loaded into the RAM 3016. The program may be loaded from the CD-ROM 3101, or directly from a network.

The program does not necessarily have to include, for example, an operating system (OS) or a third party program to cause the computer 301 to execute the functions of the learning device 1 and the like in the foregoing embodiments. The program may only include a command portion to call an appropriate function (module) in a controlled mode and obtain desired results. The manner in which the computer system 300 operates is well known, and thus a detailed description thereof has been omitted.

It should be noted that, in the program, in a step of transmitting information, a step of receiving information, or the like, processing that is performed by hardware, for example, processing performed by a modem or an interface card in the transmitting step (processing that can be performed only by hardware) is not included.

Furthermore, the computer that executes this program may be a single computer, or may be multiple computers. That is to say, centralized processing may be performed, or distributed processing may be performed.

In the foregoing embodiments, each process (each function) may be realized as centralized processing using a single apparatus (system), or may be realized as distributed processing using multiple apparatuses.

The present invention is not limited to the embodiment set forth herein. Various modifications are possible within the scope of the present invention.

### Industrial Applicability

As described above, the learning device according to the present invention has an effect that it is possible to learn a binary tree with which a source language sentence can be reordered to match the word order on the target language side at a very high level of precision, and thus this device is useful, for example, as a learning device and the like in machine translation.

### List of Reference Numerals

- 1, 3, 4: Learning device
- 2, 5: Machine translation device
- 11: Syntax analyzing device
- 12, 31: Parallel corpus
- 13: Element pair storage unit
- 14: Third analysis result storage unit
- 15, 23, 35: Target language element acquiring unit
- 16, 22, 34, 43: Determining unit
- 17, 44: Flag adding unit
- 21: Second syntax analyzing unit
- 24, 52: Target language sentence output unit
- 32: Binary tree storage unit
- 33: Binary tree-to-be-processed acquiring unit
- 36: Second determining unit
- 37: Flag changing unit
- 41: Learning binary tree storage unit
- 42: Feature acquiring unit
- 51: Target language sentence constructing unit
- 110: Second analysis result storage unit
- 111: Receiving unit
- 112: Syntax analyzing unit
- 113: Category acquiring unit
- 114: Category inserting unit
- 115: Learning unit

## Claims

1. A syntax analyzing device comprising:
a receiving unit that receives a sentence;
a syntax analyzing unit that analyzes syntax of the sentence received by the receiving unit, thereby acquiring a first analysis result, which is an analysis result having one or more elements constituting the sentence and parts of speech of the respective one or more elements and has one or more binary trees each having the parts of speech or the elements as nodes;
a category acquiring unit that acquires categories of the respective one or more elements constituting the sentence received by the receiving unit; and
a category inserting unit that acquires a second analysis result in which the categories of the elements are respectively inserted between the elements and the parts of speech of the elements, the elements respectively corresponding to the one or more categories acquired by the category acquiring unit, and constituting the first analysis result.

2. A learning device comprising:
a parallel corpus having a pair of parallel sentences, which is a pair of a source language sentence and a target language sentence;
an element pair storage unit in which one or more element pairs, each of which is a pair of a source language element and a target language element, are stored;
a second analysis result storage unit in which a second analysis result, which is a result of the processing on the source language sentence by the syntax analyzing device according to claim 1 and has one or more binary trees each having parts of speech, elements, or categories as nodes, and which is output by a learning unit of the syntax analyzing device according to claim 1 is stored;
a target language element acquiring unit that acquires target language elements respectively corresponding to one or more source language elements that are one or more nodes constituting the second analysis result, from the element pair storage unit;
a determining unit that determines whether or not to swap each of the one or more binary trees constituting the second analysis result during translation of the source language sentence into a target language sentence, based on word orders of the one or more target language elements acquired by the target language element acquiring unit and the one or more elements constituting the target language sentence; and
a flag adding unit that adds flags, which are results of the determination by the determining unit, respectively in association with the one or more binary trees, thereby acquiring a third analysis result.

3. A machine translation device comprising:
an element pair storage unit in which one or more element pairs, each of which is a pair of a source language element and a target language element, are stored;
a third analysis result storage unit in which one or more third analysis results are stored;
a receiving unit that receives a source language sentence;
a second syntax analyzing unit that analyzes syntax of the source language sentence received by the receiving unit, using the syntax analyzing device according to claim 1, thereby acquiring a second analysis result;
a determining unit that determines whether or not to swap each of one or more binary trees constituting the second analysis result, using flags added to the binary trees contained in the one or more third analysis results;
a target language element acquiring unit that acquires target language elements respectively corresponding to one or more elements constituting the source language sentence having a word order according to results of the determination by the determining unit, from the element pair storage unit; and
a target language sentence output unit that links the one or more target language elements acquired by the target language element acquiring unit according to the word order, and outputs a target language sentence.

4. A learning device comprising:
a parallel corpus having a pair of parallel sentences, which is a pair of a source language sentence and a target language sentence;
an element pair storage unit in which one or more element pairs, each of which is a pair of a source language element and a target language element, are stored;
a binary tree storage unit in which one or more binary trees are stored, each of which is a binary tree constituting a syntax analysis result of a source language sentence, in which all of a parent node and two child nodes are parts of speech, and having, in association therewith, a flag indicating whether or not to swap the binary tree during translation of the source language sentence into a target language sentence;
a syntax analyzing unit that analyzes syntax of the source language sentence, thereby acquiring a first analysis result, which is an analysis result having one or more elements constituting the sentence and parts of speech of the respective one or more elements and has one or more binary trees each having the parts of speech or the elements as nodes;
a binary tree-to-be-processed acquiring unit that acquires one or more binary trees, each of which is a binary tree constituting the first analysis result, and in which all of a parent node and two child nodes are parts of speech;
a determining unit that determines whether or not to swap each of the one or more binary trees acquired by the binary tree-to-be-processed acquiring unit, using the one or more binary trees in the binary tree storage unit;
a target language element acquiring unit that acquires target language elements respectively corresponding to two source language elements respectively corresponding to child nodes of each of the one or more binary trees, from the element pair storage unit;
a second determining unit that determines whether or not a word order of the two source language elements reflecting a result of the determination by the determining unit is the same as a word order of the two target language elements respectively corresponding to the two source language elements; and
a flag changing unit that, in a case where the second determining unit determines that the word orders are not the same, changes a value of a flag at the parent node constituting the binary tree corresponding to the determination, to the opposite value.

5. A storage medium in which a program is stored, the program causing a computer to function as:
a receiving unit that receives a sentence;
a syntax analyzing unit that analyzes syntax of the sentence received by the receiving unit, thereby acquiring a first analysis result, which is an analysis result having one or more elements constituting the sentence and parts of speech of the respective one or more elements and has one or more binary trees each having the parts of speech or the elements as nodes;
a category acquiring unit that acquires categories of the respective one or more elements constituting the sentence received by the receiving unit; and
a category inserting unit that acquires a second analysis result in which the categories of the elements are respectively inserted between the elements and the parts of speech of the elements, the elements respectively corresponding to the one or more categories acquired by the category acquiring unit, and constituting the first analysis result.

6. A computer-accessible storage medium in which a program is stored,
the program causing the storage medium to have:
a parallel corpus having a pair of parallel sentences, which is a pair of a source language sentence and a target language sentence;
an element pair storage unit in which one or more element pairs, each of which is a pair of a source language element and a target language element, are stored; and
a second analysis result storage unit in which a second analysis result, which is a result of the processing on the source language sentence by the syntax analyzing device according to claim 1 and has one or more binary trees each having parts of speech, elements, or categories as nodes, and which is output by a learning unit of the syntax analyzing device according to claim 1, is stored, and
causing a computer to function as:
a target language element acquiring unit that acquires target language elements respectively corresponding to one or more source language elements that are one or more nodes constituting the second analysis result, from the element pair storage unit;
a determining unit that determines whether or not to swap each of the one or more binary trees constituting the second analysis result during translation of the source language sentence into a target language sentence, based on word orders of the one or more target language elements acquired by the target language element acquiring unit and the one or more elements constituting the target language sentence; and
a flag adding unit that adds flags, which are results of the determination by the determining unit, respectively in association with the one or more binary trees, thereby acquiring a third analysis result.

7. A computer-accessible storage medium in which a program is stored,
the program causing the storage medium to have:
an element pair storage unit in which one or more element pairs, each of which is a pair of a source language element and a target language element, are stored; and
a third analysis result storage unit in which one or more third analysis results are stored, and
causing a computer to function as:
a receiving unit that receives a source language sentence;
a second syntax analyzing unit that analyzes syntax of the source language sentence received by the receiving unit, using the syntax analyzing device according to claim 1, thereby acquiring a second analysis result;
a determining unit that determines whether or not to swap each of one or more binary trees constituting the second analysis result, using flags added to the binary trees contained in the one or more third analysis results;
a target language element acquiring unit that acquires target language elements respectively corresponding to one or more elements constituting the source language sentence having a word order according to results of the determination by the determining unit, from the element pair storage unit; and
a target language sentence output unit that links the one or more target language elements acquired by the target language element acquiring unit according to the word order, and outputs a target language sentence.

8. A computer-accessible storage medium in which a program is stored,
the program causing the storage medium to have:
a parallel corpus having a pair of parallel sentences, which is a pair of a source language sentence and a target language sentence;
an element pair storage unit in which one or more element pairs, each of which is a pair of a source language element and a target language element, are stored; and
a binary tree storage unit in which one or more binary trees are stored, each of which is a binary tree constituting a syntax analysis result of a source language sentence, in which all of a parent node and two child nodes are parts of speech, and having, in association therewith, a flag indicating whether or not to swap the binary tree during translation of the source language sentence into a target language sentence, and
causing a computer to function as:
a syntax analyzing unit that analyzes syntax of the source language sentence, thereby acquiring a first analysis result, which is an analysis result having one or more elements constituting the sentence and parts of speech of the respective one or more elements and has one or more binary trees each having the parts of speech or the elements as nodes;
a binary tree-to-be-processed acquiring unit that acquires one or more binary trees, each of which is a binary tree constituting the first analysis result, and in which all of a parent node and two child nodes are parts of speech;
a determining unit that determines whether or not to swap each of the one or more binary trees acquired by the binary tree-to-be-processed acquiring unit, using the one or more binary trees in the binary tree storage unit;
a target language element acquiring unit that acquires target language elements respectively corresponding to two source language elements respectively corresponding to child nodes of each of the one or more binary trees, from the element pair storage unit;
a second determining unit that determines whether or not a word order of the two source language elements reflecting a result of the determination by the determining unit is the same as a word order of the two target language elements respectively corresponding to the two source language elements; and
a flag changing unit that, in a case where the second determining unit determines that the word orders are not the same, changes a value of a flag at the parent node constituting the binary tree corresponding to the determination, to the opposite value.
